# FASCICULE DE BREVET EUROPEEN

(11) **EP 3 110 665 B1**
(45) Date de publication et mention de la délivrance du brevet: **14.03.2018**
(21) Numéro de dépôt: 15714856.0
(22) Date de dépôt: 26.02.2015
(51) Int. Cl.: B60R 19/38, B62D 47/00, B62D 53/00

(54) **VEHICULE AUTOMOBILE ROUTIER COMPORTANT UN AMORTISSEUR DE CHOCS ESCAMOTABLE**
KRAFTFAHRZEUG MIT EINKLAPPBAREM STOSSDÄMPFER
MOTOR VEHICLE WITH A RETRACTABLE SHOCK ABSORBER

(30) Priorité: 27.02.2014 FR 1451571
(43) Date de publication de la demande: 04.01.2017
(73) Titulaire: Commissariat à l'Energie Atomique et aux Energies Alternatives, 75015 Paris (FR); Metacar Transport Systems, -69250 Albigny-sur-Saône (FR)
(72) Inventeur: CERVANTES, Valery, 38000 Grenoble (FR)
(74) Mandataire: Colombo, Michel
(86) Numéro de dépôt international: PCT/FR2015/050454
(87) Numéro de publication internationale: WO 2015/128583

(56) Documents cités:
- FR-A1- 2 696 391
- US-A- 5 417 300

## Description

L'invention concerne un véhicule automobile routier comportant un amortisseur de chocs escamotable.

On connaît des véhicules automobiles routiers comportant un amortisseur de chocs escamotable, de façon à réduire l'encombrement de ce véhicule lorsqu'il est stationné. Le brevet US 5417300 (SCHULTZ) décrit un tel véhicule, qui comporte :
- un châssis s'étendant le long d'un axe longitudinal entre une extrémité avant et une extrémité arrière ;
- un amortisseur de chocs comportant une face frontale et étant apte à absorber au moins une partie de l'énergie d'un choc mécanique contre un obstacle reçu sur sa face frontale en se déformant :
   - depuis une position active, dans laquelle il est directement exposé à l'extérieur du véhicule automobile devant l'une ou l'autre de l'extrémité avant ou arrière afin de protéger cette extrémité contre un choc mécanique,
   - vers une position accidentée, distincte de la position active ;
- un dispositif de déplacement apte à déplacer automatiquement, en alternance et de façon réversible, l'amortisseur de chocs entre :
   - la position active, et
   - une position escamotée, distincte des positions active et accidentée.

Dans cette description, un véhicule routier est un véhicule muni de roues et apte à se déplacer librement, par roulement des roues, sur une route ou une surface plane. Un véhicule ferroviaire n'est donc pas un véhicule routier.

Les termes « attaché » et « attelé » seront ici utilisés de façon équivalente.

Cependant, un tel amortisseur de chocs escamotable nécessite typiquement un actionneur commandable pour le déplacer entre ses positions. Ce déplacement est généralement commandé par un système de contrôle électronique, compliqué et coûteux à mettre en oeuvre et à entretenir.

De l'état de la technique est également connu du document FR2696391.

Il existe donc un besoin pour un véhicule automobile routier présentant un amortisseur de chocs escamotable avec une mise en oeuvre simplifiée et plus économique.

L'invention concerne donc un tel véhicule dans lequel le dispositif de déplacement est conforme à la revendication 1.

Le véhicule ci-dessus exploite la force qui apparaît quand le butoir du véhicule pousse la face d'appui de l'autre véhicule, pour déplacer l'amortisseur de choc de sa position active vers sa position escamotée. Ainsi, l'amortisseur de chocs peut être escamoté simplement et automatiquement lorsque le véhicule s'approche de l'autre véhicule, sans qu'il ne soit nécessaire de recourir à un actionneur commandé électriquement et à un circuit électronique de commande de cet actionneur. La réalisation du véhicule est alors simplifiée, de même que son utilisation.

Les modes de réalisation de l'invention peuvent présenter une ou plusieurs des caractéristiques des revendications dépendantes 2 à 10.

Ces modes de réalisation présentent en outre les avantages suivants :
- en plaçant le pare-chocs au-dessus de l'habitacle lorsqu'il est dans la position escamotée, le pare-chocs présente une double fonction de protection, en tant que pare-chocs d'une part et en tant qu'arceau de sécurité de l'habitacle d'autre part, ce qui améliore la sécurité du véhicule sans engendrer une augmentation de l'encombrement du véhicule ;
- les bras latéraux du pare-chocs permettent de protéger le véhicule contre des chocs mécaniques pouvant survenir sur un flanc latéral du véhicule ;
- la liaison pivot permet une fixation facilitée du pare-chocs escamotable ;
- l'utilisation du pare-chocs sur un véhicule attelable pour former un convoi permet d'assurer une double fonction : protéger un des attelages avant ou arrière des véhicules lorsque cet attelage n'est pas attelé pour attacher ce véhicule à un autre véhicule et, lorsqu'il est ainsi attaché, protéger l'habitacle tout en réduisant la longueur du convoi. En effet, il n'est pas nécessaire de protéger un attelage avant ou arrière au moyen du pare-chocs lorsque cet attelage est attelé.

L'invention sera mieux comprise à la lecture de la description qui va suivre, donnée uniquement à titre d'exemple non limitatif et faite en se référant aux dessins sur lesquels :
- la figure 1 est une illustration schématique selon une vue de profil d'un véhicule automobile comportant un amortisseur de chocs escamotable, placé dans la position active ;
- les figures 2A et 2B sont des illustrations schématiques, en vue rapprochée, de l'amortisseur de chocs du véhicule de la figure 1 dans ses positions, respectivement, active et accidentée ;
- la figure 3 est une illustration schématique selon une vue de profil du véhicule de la figure 1 avec son amortisseur de chocs dans la position escamotée ;
- les figures 4A et 4B sont des illustrations schématiques, selon des vues de profil, du dispositif de déplacement d'un amortisseur de chocs des figures 1 à 3, l'amortisseur de chocs étant dans les positions, respectivement, active et escamotée ;
- la figure 5 est une illustration schématique selon une vue de profil d'un convoi automobile routier formé de véhicules identiques au véhicule de la figure 1 ;
- la figure 6 est une illustration schématique selon une vue de profil d'un autre mode de réalisation du dispositif de déplacement selon les figures 4A et 4B ;
- les figures 7A et 7B sont des illustrations schématiques, en vue rapprochée, d'un autre mode de réalisation de l'amortisseur de chocs du véhicule de la figure 1, dans ses positions, respectivement, active et accidentée ;
- les figures 8A et 8B sont des illustrations schématiques, selon une vue de profil, d'un autre mode de réalisation de l'amortisseur de chocs du véhicule des figures 1 et 3, l'amortisseur de chocs étant illustré dans les positions, respectivement, active et escamotée.

Dans ces figures, les mêmes références sont utilisées pour désigner les mêmes éléments.

Dans la suite de cette description, les caractéristiques et fonctions bien connues de l'homme du métier ne sont pas décrites en détails.

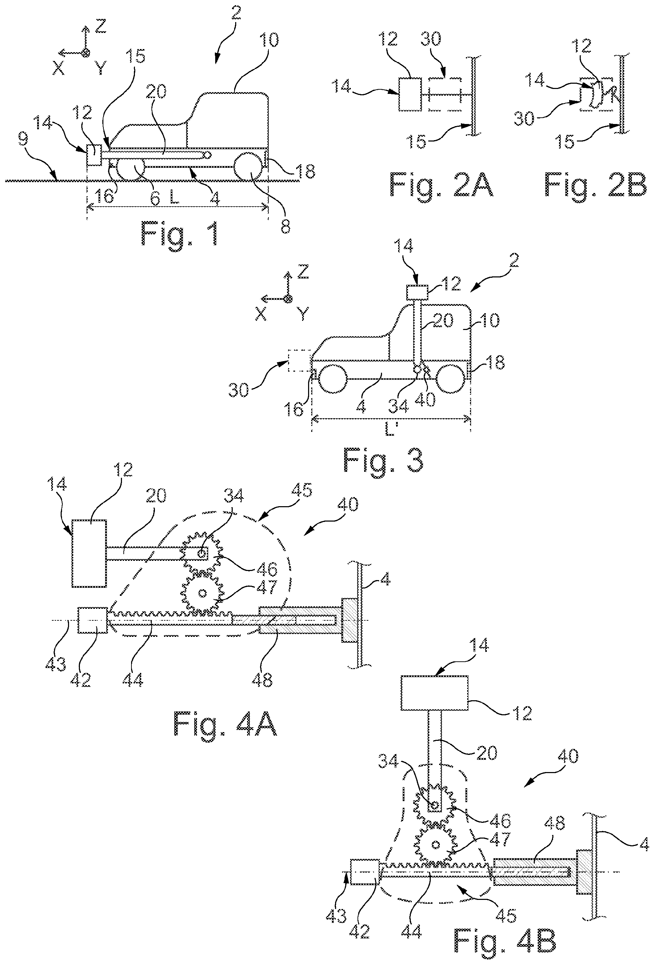

La figure 1 représente un véhicule automobile 2 routier équipé d'un moteur (non illustré). Le véhicule 2 comporte :
- un châssis 4 sur lequel sont fixées en rotation une pluralité de roues 6, 8 aptes à permettre un déplacement du véhicule 2 par roulement sur une route 9 lorsqu'elles sont mises en mouvement par le moteur du véhicule 2 ;
- un habitacle 10, monté sur le châssis 4 et étant apte à accueillir un conducteur et/ou un passager du véhicule 2 ;
- un amortisseur de chocs, ici un pare-chocs 12, comportant une face frontale 14 plane.

Le châssis 4 s'étend ici longitudinalement entre des extrémités avant et arrière. Le châssis 4 est par exemple formé de parties avant et arrière distinctes et articulées entre elles.

Par exemple, le véhicule 2 est identique au véhicule automobile décrit dans la demande de brevet français déposée le 8 mars 2013 sous le numéro FR 1352128, sauf qu'il comporte l'amortisseur de chocs escamotable qui va être décrit dans ce qui suit.

Dans cet exemple, le véhicule 2 comporte en outre des attelages avant 16 et arrière 18, fixés respectivement sur les extrémités avant et arrière du châssis 4. Ces attelages 16 et 18 permettent d'attacher le véhicule 2 à d'autres véhicules routiers attelables pour former un convoi routier.

A cet effet, l'attelage 16 est déplaçable, en alternance, entre :
- une position attelée, dans laquelle cet attelage coopère avec un attelage arrière, identique à l'attelage 18 et situé sur un autre véhicule, pour attacher mécaniquement ces véhicules entre eux, et
- une position dételée, dans laquelle ces véhicules sont détachés l'un de l'autre.

De même, l'attelage 18 est déplaçable, en alternance, entre :
- une position attelée, dans laquelle cet attelage coopère avec un attelage avant, identique à l'attelage 16 et situé sur un autre véhicule, pour attacher mécaniquement ces véhicules entre eux, et
- une position dételée, dans laquelle ces véhicules sont détachés l'un de l'autre.

Le pare-chocs 12 est ici configuré pour protéger l'attelage 16 contre des chocs mécaniques lorsqu'il est dans une position active. Ici, l'attelage 16 est fixé sur une partie 15 du châssis 4. Les attelages 16 et 18 sont tous les deux fixés sans aucun degré de liberté sur le châssis 4.

Avantageusement, les attelages 16 et 18 sont configurés pour attacher entre eux les véhicules sans degré de liberté en rotation en lacet. Par rotation en lacet, on désigne ici un mouvement de rotation uniquement autour d'un axe perpendiculaire au plan de roulement du véhicule. Le plan de roulement d'un véhicule est défini comme le plan passant par les surfaces de contact entre les roues du véhicule et la route sur laquelle circule ce véhicule. Par exemple, ces attelages 16, 18 sont identiques aux attelages décrits dans la demande FR 1352128 précitée.

Le véhicule 2 comporte également un dispositif de direction permettant de tourner des roues 6 ou 8 pour diriger le véhicule sur la route. Par exemple, il s'agit du dispositif décrit en référence aux figures 4 et 10 de la demande FR 1352128 précitée.

Le pare-chocs 12 est adapté pour protéger le véhicule 2 contre un choc mécanique frontal. Pour ce faire, le pare-chocs 12 est apte à absorber une partie de l'énergie d'un choc mécanique contre un obstacle reçu sur la face 14, en se déformant, de façon inélastique, entre des positions active et accidentée distinctes l'une de l'autre.

Dans la position active, le pare-chocs 12, ou tout au moins sa face 14, est directement exposé à l'extérieur du véhicule 2 afin de protéger le châssis 4 contre un choc mécanique. Par exemple, le pare-chocs 12 est apte à résister sans se déformer de façon inélastique à une force de 100N ou de 1kN exercée sur sa face 14. Le pare-chocs 14 est par exemple conforme aux préconisations du « règlement 42 de l'accord du 20 mars 1980 concernant l'adoption de conditions uniformes d'homologation et la reconnaissance réciproque de l'homologation des équipements et pièces de véhicules à moteur », tel que défini par la Commission économique pour l'Europe des Nations Unies (« United Nations Economic Commission for Europe »). Une copie de ce règlement est par exemple disponible sur le site internet à l'adresse suivante : «http://www.unece.org/trans/main/wp29/wp29regs41-60.html» ou encore aux directives européennes 2000/40/CE, 1999/98/CE ou au règlement européen CE n°78/2009. Dans cet exemple, le pare-chocs 12 est configuré pour protéger la partie avant 15 du châssis 4 lorsqu'il est dans sa position active. Sur la figure 1, le pare-chocs 12 est illustré dans sa position active.

Le pare-chocs 12 comporte ici :
- une barre centrale, dont une face tournée vers l'opposé du véhicule 2 forme la face 14;
- deux bras latéraux 20, situés chacun d'un côté respectif de l'habitacle 10, attachant mécaniquement la barre centrale au châssis 4.

Ici, chaque bras 20 est relié mécaniquement d'une part à une des extrémités de la barre centrale sans degré de liberté et, d'autre part, au châssis 4. Chaque bras 20 s'étend selon une direction essentiellement perpendiculaire à la face 14. Par « essentiellement perpendiculaire » on entend ici que chaque bras 20 s'étend perpendiculairement à la face 14, à ±20° près ou à ±10° près ou à ±5° près.

Dans cet exemple, la barre centrale s'étend selon une direction latérale Y perpendiculaire à une direction longitudinale X du véhicule 2. La longueur des bras 20, dans la direction X, est inférieure à L, où L est la longueur du véhicule 2 lorsque le pare-chocs 12 est dans la position active. La longueur des bras 20 est en outre choisie dans le cas présent suffisamment longue pour que le pare-chocs 12 puisse se déplacer entre ses positions active et escamotée sans buter contre la carrosserie du véhicule 2. A cet effet, la longueur des bras 20 est ici supérieure au tiers du diamètre des roues 6, 8 et, de préférence, supérieure à L/3 ou à L/2. On définit la longueur L comme étant la longueur de l'espace occupée par le véhicule 2 lorsque le pare-chocs 12 est dans la position active, comme étant la distance mesurée le long de la direction X entre une extrémité arrière du véhicule 2, par exemple un pare-chocs arrière du véhicule 2, et la face 14.

Avantageusement, chaque bras 20 présente une face latérale directement tournée vers l'extérieur du véhicule 2 pour absorber un choc mécanique pouvant survenir sur un flanc latéral du véhicule 2. Par flanc latéral, on désigne ici une face latérale du véhicule 2 qui est tournée vers l'extérieur du véhicule 2 et qui s'étend essentiellement dans un plan vertical perpendiculaire à la direction Y. Chaque bras 20 est ici apte à résister, sans se déformer de façon inélastique, à une force exercée selon une direction parallèle à la direction Y et d'intensité supérieure ou égale à 100N ou à 1kN.

Les figures 2A et 2B représentent le pare-chocs 12 dans ses positions, respectivement, active et accidentée. Pour simplifier ces figures 2A et 2B, la liaison du pare-chocs 12 au véhicule 2 n'est pas illustrée en détail.

Le véhicule 2 comporte en outre une zone d'espacement 30 conformée de façon à pouvoir recevoir le pare-chocs 12 dans sa position accidentée sans que celui-ci n'endommage le châssis 4.

La zone 30 est ici située, lorsque le pare-chocs 12 est dans la position active (figure 2A) entre la face 14 et le châssis 4. Cette zone 30 est ici formée du volume situé entre la partie 15 du châssis 4 et le volume occupé par le pare-chocs 12 lorsqu'il est dans sa position active. En outre, cette zone 30 est ici une zone vide, c'est à dire qu'elle ne contient aucun élément du véhicule 2. En particulier, l'attelage 16 n'est pas inclus dans la zone 30. La zone 30 est donc disjointe du volume occupé par le châssis 4 ou par l'habitacle 10, du fait que le pare-chocs 12 n'est pas directement relié à la partie 15 et se tient à une distance non nulle de cette partie 15.

Par exemple, la zone 30 présente une forme de poutre, ou de parallélépipède rectangle, dont les faces sont délimitées par le pare-chocs 12, la partie 15 du châssis et les bras 20. La longueur de la zone 30, mesurée selon la direction X, est par exemple supérieure ou égale à 1 cm ou à 5cm ou à 10cm ou à 15cm. La largeur de la zone 30, mesurée selon la direction Y, est supérieure à 40 % de la largeur du véhicule et inférieure ou égale à la largeur du véhicule 2.

Dans la position accidentée (figure 2B), le pare-chocs 12 présente une forme déformée par rapport à la position active, de telle façon que la face 14 est ici contenue dans la zone 30.

Le déplacement du pare-chocs 12 depuis la position active vers la position accidentée est généralement irréversible. Une fois que le pare-chocs 12 est dans la position accidentée, il doit être remplacé pour à nouveau être en mesure de remplir sa fonction de protection.

Le pare-chocs 12 est en outre déplaçable sélectivement, en alternance et de façon réversible, entre la position active et une position escamotée. La position escamotée est distincte des positions active et accidentée.

Ici, dans la position escamotée, la projection orthogonale du pare-chocs 12 sur le plan de roulement du véhicule 2 est comprise entre les projections orthogonales sur ce même plan :
- d'un axe transversal du véhicule situé juste devant le pare-chocs 12 lorsqu'il est dans sa position active, et
- de l'extrémité du véhicule située du côté opposé au pare-chocs 12.

Les notions de « avant » et de « derrière » sont ici définies selon la direction X et sont orientées par rapport aux extrémités avant et arrière du véhicule 2. L'extrémité avant du véhicule est ici du côté de la partie 15. Le plan de roulement est ici horizontal et s'étend selon les directions X et Y.

Dans cet exemple, dans la position escamotée, la projection orthogonale du pare-chocs 12 sur le plan de roulement est préférentiellement comprise entre les projections orthogonales, sur ce même plan de roulement, de l'extrémité avant du châssis 4 et de l'extrémité du véhicule 2 qui est située du côté opposé au pare-chocs 12. Ces projections correspondent ici respectivement à celles de la partie 15 et de l'extrémité arrière du châssis 4.

La figure 3 représente un exemple du pare-chocs 12 dans sa position escamotée. Lorsque le pare-chocs 12 est dans la position escamotée, la zone 30 est directement exposée à l'extérieur du véhicule de façon à réduire la longueur du véhicule 2. De plus, ici, le pare-chocs 12 ne peut pas être déplacé entre les positions escamotée et accidentée.

Du fait que la zone 30 est directement exposée à l'extérieur du véhicule 2, la longueur de l'emplacement occupé par le véhicule est réduite. On désigne par L' la longueur de l'emplacement occupée par le véhicule, telle que mesurée selon la direction X entre des extrémités avant et arrière du véhicule 2, par exemple entre la partie 15 et la même extrémité arrière du véhicule 2 que celle utilisée pour mesurer la longueur L. Cette longueur L' est plus petite que la longueur L d'au moins 1cm ou 5cm ou 10cm ou 20cm, lorsque le pare-chocs 12 est dans la position escamotée. Ainsi, la compacité du véhicule peut être augmentée lorsque le pare-chocs 12 n'a pas besoin d'être utilisé, par exemple lorsque le véhicule 2 est en stationnement.

Ici, dans sa position escamotée, le pare-chocs 12 est situé essentiellement au-dessus de l'habitacle 10, c'est-à-dire qu'il s'étend, sur plus de 50 % de sa longueur, mesurée selon la direction Y, au-dessus de l'habitacle 10. Plus exactement, ici, la barre centrale et la face 14 sont situés au-dessus de l'habitacle 10. La notion d' « au-dessus » est exprimée selon la direction Z orthogonale aux directions X et Y. Le dessus de l'habitacle est ici placé à l'opposé selon la direction Z d'une face inférieure du véhicule 2. La face inférieure du véhicule 2 est celle qui est tournée vers la route sur laquelle roule le véhicule 2 lorsque ce véhicule 2 roule normalement. La direction Z est ici verticale.

Dans la position escamotée, le pare-chocs 12 forme ainsi un arceau de sécurité pour protéger l'habitacle 10, notamment pour limiter l'écrasement de l'habitacle 10 en cas de renversement du véhicule 2 sur son toit ou sur un côté. A cet effet, le pare-chocs 12 est apte à résister sans se déformer de façon inélastique à une force mécanique selon la direction Z et supérieure à 100N ou à 200N ou à 1kN ou à 10kN ou à 15 kN. De façon préférentielle, lorsqu'il est dans la position escamotée, le pare-chocs 12 est apte à résister sans se déformer au poids exercé par le véhicule 2, lorsque le véhicule 2 est en position renversée et que le pare-chocs 12 se trouve alors en contact direct avec la route 9 sur laquelle le véhicule 2 circule. La sécurité des occupants de l'habitacle 10 est de fait améliorée.

Dans cet exemple, le pare-chocs 12 est déplaçable entre ses positions active et escamotée par un mouvement de rotation autour d'un axe de rotation parallèle à la direction Y. Ici, l'angle formé par la projection des directions des bras 20 dans un plan longitudinal vertical du véhicule 2, entre les positions respectivement escamotée et active, est égal à 90° à 45° près ou 30° près ou à 10° près ou à 5° près. Ici, dans la position escamotée, les bras 20 s'étendent essentiellement selon la direction Z.

A cet effet, les bras 20 sont reliés mécaniquement au châssis 4 avec un degré de liberté en rotation par des liaisons pivot 34 qui ont un axe de rotation parallèle à la direction Y.

De préférence, les liaisons 34 sont disposées de façon à ce que les projections géométriques, dans le plan longitudinal vertical du véhicule 2, du centre géométrique de la face 14 et de l'axe de rotation de chaque liaison 34 soient alignées le long d'une direction parallèle à la direction X, à 5° près ou à 10 ° ou a 20° près.

Cela permet de réduire le risque, au cas où un choc mécanique serait reçu sur la face 14 selon la direction X lorsque le pare-chocs 12 est dans la position active, que le pare-chocs 12 se déplace accidentellement de la position active vers la position escamotée au lieu de rester en position active. Un tel déplacement accidentel n'est en effet pas souhaitable car cela compromettrait la sécurité du véhicule 2, car la partie 15 ne serait alors plus protégée par le pare-chocs 12.

En variante, les liaisons 34 sont configurées de façon à ce que, lorsque le pare-chocs 12 est dans la position active, les bras 20 soient orientés non pas parallèlement à la route mais soient s'étendent en direction de la route 9.

Le pare-chocs 12 est de préférence réalisé dans un matériau qui présente des propriétés mécaniques aptes à absorber un choc mécanique de façon inélastique mais tout en évitant une déformation excessive due à ce choc mécanique, car cela pourrait nuire à sa fonction d'arceau de protection de l'habitacle 10. Par exemple, le pare-chocs 12 comporte une armature en matière métallique.

Le véhicule 2 comporte en outre un dispositif 40 de déplacement, apte à déplacer automatiquement et en alternance le pare-chocs 12 dans ses positions active et escamotée. Les figures 4A et 4B représentent plus en détail un exemple du dispositif 40.

Plus précisément, le dispositif 40 est ici configuré pour déplacer automatiquement le pare-chocs 12 :
- de sa position active vers sa position escamotée lorsque le véhicule 2 vient s'atteler à l'arrière d'un autre véhicule au moyen de l'attelage 16, et
- de la position escamotée vers la position active lorsque le véhicule 2 se détache de l'autre véhicule ;

A cet effet, le dispositif 40 comporte un butoir 42 mobile et une liaison mécanique 45 entre le butoir et le pare-chocs 12.

Le butoir 42 est apte à venir en contact sur une face d'appui située sur un autre véhicule, lorsque le véhicule 2 s'approche de cet autre véhicule. Typiquement, le contact avec cet autre véhicule s'établit avant que le pare-chocs 12 ne vienne toucher cet autre véhicule. Le butoir 42 est en outre déplaçable, en alternance et de façon réversible, entre des positions déployée et rétractée, sous l'effet de la force de réaction exercée par la face d'appui lorsque le véhicule 2 entre en contact avec cette face d'appui. Dans sa position rétractée, le butoir 42 est plus enfoncé vers l'intérieur du véhicule 2 que lorsqu'il est dans sa position déployée.

Dans cet exemple, le butoir 42 est placé à l'extrémité avant du véhicule, en dessous du pare-chocs 12. Ce butoir 42 est ainsi apte à venir en contact avec la face d'appui d'un autre véhicule, par exemple disposée en saillie à l'extrémité arrière de cet autre véhicule, lorsque le véhicule 2 s'avance vers l'arrière de cet autre véhicule dans le but de s'y atteler. Ici, l'autre véhicule est un véhicule identique au véhicule 2.

La liaison 45 est configurée pour transformer le déplacement du butoir 42 entre ses positions rétractée et déployée en un déplacement correspondant du pare-chocs 12 entre ses positions, respectivement, escamotée et active.

Dans cet exemple, le butoir 42 se déplace le long d'un axe de déplacement 43 parallèle à la direction X, entre ses positions déployée et rétractée. La liaison 45 comporte :
- une crémaillère 44 solidaire sans degré de liberté du butoir 42 et apte à se déplacer en translation le long de l'axe 43 ;
- des pignons 46, 47 agencés pour transformer le déplacement en translation du butoir 42 en un déplacement en rotation du pare-chocs 12 lorsque la crémaillère 44 se déplace.

A cet effet, le pignon 46 est solidaire sans degré de liberté d'un bras 20 du pare-chocs 12 et est mobile en rotation autour de la liaison pivot 34. Le pignon 47 est engrené avec le pignon 46 et la crémaillère 44, de manière à entraîner en rotation le pignon 46, et donc le pare-chocs 12, lorsque la crémaillère 44 se déplace en translation le long de la direction 43. Par exemple, le pignon 47 est monté en rotation autour d'un axe parallèle à l'axe de rotation de la liaison 34.

Avantageusement, le dispositif 40 comporte également un élément de rappel 48, configuré pour exercer, sur le butoir 42, une force mécanique de rappel qui ramène automatiquement le butoir 42 depuis sa position rétractée vers sa position déployée. Cette force s'exerce ici selon la direction X. Cet élément 48 est ici un vérin à gaz, ce qui permet, en plus d'exercer la force de rappel, d'amortir mécaniquement le choc qui se produit lorsque le butoir 42 entre en contact avec l'autre véhicule. A cet effet, l'élément 48 est ancré sans degré de liberté au châssis 4 à l'une de ses extrémités et à la crémaillère 44 à l'autre de ses extrémités.

Ainsi, lorsque le véhicule 2 doit être attelé à un autre véhicule au moyen de son attelage 16, ce véhicule 2 est déplacé par rapport à l'autre véhicule pour réaliser une manoeuvre d'accostage, jusqu'à ce qu'ils entrent en contact direct l'un avec l'autre. Plus précisément, le butoir 42 entre en contact mécanique avec la face d'appui de cet autre véhicule. Sous l'effet de ce contact, le butoir 42 est déplacé de sa position déployée vers sa position rétractée, ce qui entraîne le déplacement en rotation du pare-chocs 12 depuis sa position active vers sa position escamotée.

Lorsque l'on détache les véhicules, le butoir 42 n'est plus en contact avec la face d'appui de l'autre véhicule et reprend sa position rétractée, sous l'effet de la force de rappel exercée par l'élément 48. Cela entraîne le pare-chocs 12 en déplacement depuis sa position escamotée vers sa position active.

On dispose ainsi d'un moyen simple et robuste de déplacer automatiquement le pare-chocs 12 lors de l'accostage du véhicule 2 à un autre véhicule pour attacher ensemble ces véhicules.

Avantageusement, les liaisons mécaniques entre les pièces formant le dispositif 40 sont dimensionnées de manière à se rompre au cas où une force supérieure à 10kN ou à 100kN ou 1000kN est exercée sur le butoir 42 et que le pare-chocs 12 est dans sa position active. Par exemple, la résistance mécanique de ces liaisons à un choc mécanique est moindre que celle des bras 20. Ainsi, le pare-chocs 12 n'est pas déplacé vers sa position escamotée si un choc accidentel important est reçu sur le butoir 42.

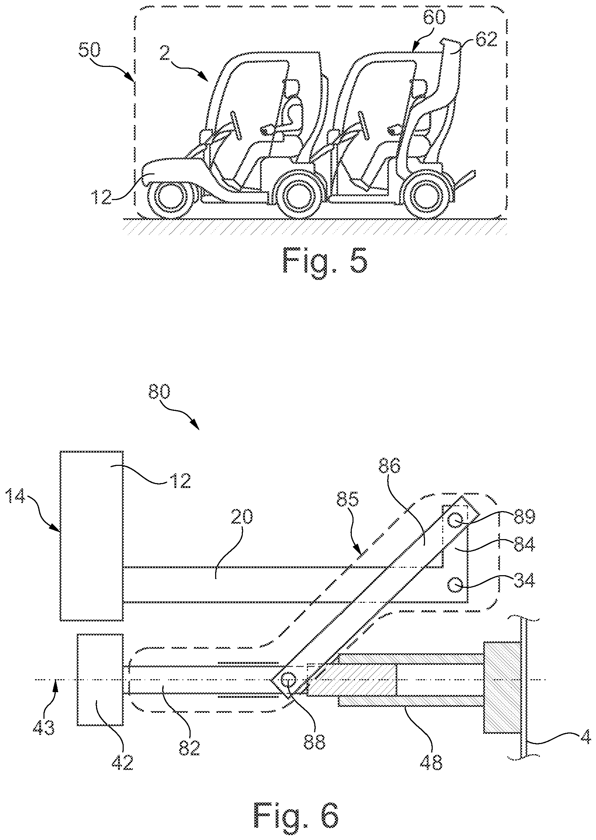

La figure 5 représente un convoi 50 formé du véhicule 2 et d'un véhicule 60 qui lui est identique, sauf que le pare-chocs de ce véhicule porte la référence 62. Les véhicules 2 et 60 sont attachés entre eux au moyen de leurs attelages avant et arrière respectifs. Le véhicule 60 est en remorque du véhicule 2. Dans cet exemple, le pare-chocs 12 est en position active, tandis que le pare-chocs 62 est en position escamotée. En mettant le pare-chocs 62 en position escamotée tant que le véhicule 60 est remorqué par le véhicule 2, l'encombrement du convoi 50 est réduit sans que cela ne réduise la sécurité du véhicule 60. En effet, tant que le véhicule 60 est dans le convoi, sa partie avant n'a pas besoin d'être protégée puisqu'elle n'est pas directement exposée à l'extérieur du convoi. La sécurité des occupants de l'habitacle du véhicule 60 est même accrue, du fait de la fonction d'arceau de sécurité offerte par le pare-chocs 62 lorsqu'il est dans la position escamotée.

La figure 6 représente un dispositif 80 de déplacement du pare-chocs 12 apte à être utilisé à la place du dispositif 40 pour réaliser la même fonction. Le dispositif 80 est identique au dispositif 40, sauf que la liaison 45 est remplacée par une liaison mécanique 85 dans laquelle :
- la crémaillère 44 est remplacée par une barre 82 solidaire du véhicule 2 par une liaison glissière et apte à se déplacer uniquement en translation le long de l'axe 43, et
- les pignons 46, 47 sont remplacés par un bras 84 et une bielle 86.

Le levier 84 est solidaire sans degré de liberté du bras 20 et s'étend selon une direction essentiellement perpendiculaire et de façon parallèle au plan vertical longitudinal du véhicule 2. La bielle 86 est reliée à ses extrémités respectivement à la barre 82 et au levier 84 au moyen de liaisons pivot 88, 89 qui ont un axe de rotation parallèle à l'axe de rotation de la liaison 34. Lorsque la barre 82 se déplace en translation le long de l'axe 43, la bielle 86 est entraînée en déplacement et provoque le déplacement du pare-chocs 12 en rotation autour de l'axe de rotation de la liaison 34.

De nombreux autres modes de réalisation sont possibles.

Le châssis 4 n'est pas forcément formé de deux parties distinctes. En variante, le châssis 4 n'est pas articulé.

Le pare-chocs 12 ne présente pas forcément une forme d'arceau. Il peut par exemple présenter une forme de poutre qui s'étend horizontalement et essentiellement selon la direction Y devant la partie 15.

La position escamotée du pare-chocs 12 peut être définie différemment. Par exemple, dans la position escamotée, le pare-chocs n'est pas placé au-dessus de l'habitacle 10.

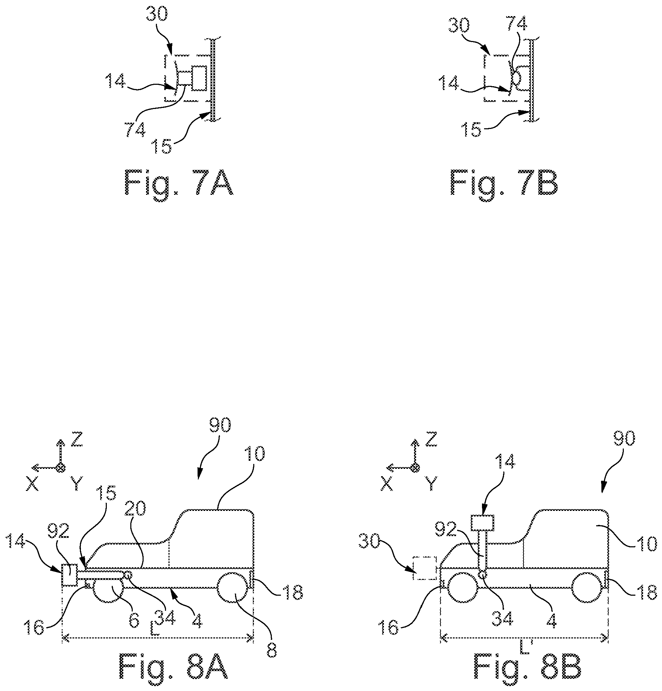

Le pare-chocs 12 peut présenter une forme différente. En particulier, le pare-chocs 12 n'occupe pas forcément, lorsqu'il est dans sa position active, un volume distinct de la zone 30. Par exemple, les figures 7A et 7B illustrent, respectivement, dans les positions active et accidentée, un pare chocs 74 apte à remplacer le pare-chocs 12. Il s'agit par exemple du pare-chocs du document EP1350680B1. Le pare-chocs 74 est placé devant la partie 15 sans laisser d'espace avec cette partie 15. Il est donc contenu dans la zone 30 lorsqu'il est dans sa position active.

Les figures 8A et 8B représentent un véhicule 90 identique au véhicule 2 sauf qu'il comporte un pare-chocs 92 à la place du pare-chocs 12. Le pare-chocs 92 ne diffère de l'amortisseur de chocs 12 que dans la façon dont il est fixé au véhicule 90. Ici, dans sa position escamotée, le pare-chocs 92 est positionné non pas au-dessus de l'habitacle 10 mais au-dessus de l'extrémité avant du véhicule 2. De cette façon, la protection latérale de l'habitacle 10 est renforcée. A cet effet, les liaisons 34 sont placées sur le châssis de telle sorte que la projection orthogonale de l'axe de rotation des liaisons 34 sur le plan de roulement soit comprise entre les projections orthogonales respectives, sur ce même plan de roulement, de l'habitacle 10 et d'un axe transversal du véhicule situé juste devant le pare-chocs 12 lorsqu'il est dans sa position active.

En variante, la face 14 n'est pas plane mais peut à la place présenter une forme convexe ou concave. Dans ce cas, la direction des bras 20 est définie par rapport à un plan frontal du pare-chocs 12. Ce plan frontal est défini comme un plan vertical délimitant une base de la forme convexe ou concave de la face 14.

Les attelages 16 et 18 peuvent être omis. Ils peuvent aussi être fixés sur le châssis 4 avec seulement un degré de liberté.

Le pare-chocs 12 peut être placé à l'arrière du véhicule 2 de façon à protéger, lorsque le pare-chocs 12 est dans la position active, une partie arrière du châssis, opposée à la partie 15. Dans ce cas le pare chocs est configuré pour protéger l'attelage arrière 18. Le dispositif 40 est modifié en conséquence. En variante, le véhicule 2 comporte deux exemplaires du pare-chocs 12 respectivement configurés pour protéger, dans leur position active respective, les parties avant et arrière du châssis 4.

En variante, un des bras 20 est omis.

La liaison pivot 34 peut présenter un axe de rotation différent de la direction Y.

Le mécanisme 45 peut être différente. Par exemple, le mécanisme 45 comporte une glissière de forme recourbée et le long de laquelle le butoir 42 est apte à se déplacer. La direction 43 n'est alors pas rectiligne.

Les liaisons 34 peuvent aussi être placées sur le châssis de telle sorte que la projection orthogonale de l'axe de rotation des liaisons 34 sur le plan de roulement soit comprise entre les projections orthogonales respectives, sur ce même plan de roulement, de l'habitacle 10 et d'un axe transversal du véhicule situé juste derrière le pare-chocs 12 lorsqu'il est dans sa position active.

Les pignons 46, 47 peuvent être remplacés par des roues reliées entre elles par une courroie.

L'élément 48 peut être autre chose qu'un vérin à gaz. Par exemple, l'élément 48 est un vérin hydraulique associé à un amortisseur oléopneumatique ou à un ressort mécanique. L'élément 48 peut aussi être omis. Dans ce cas, la force de rappel est exercée sur le butoir 42 par exemple par le poids du pare-chocs 12.

Le véhicule 60 n'est pas forcément motorisé.

En variante, dans la position escamotée, le pare-chocs 62 est placé derrière une extrémité arrière du véhicule 60, de telle sorte que sa projection orthogonale dans le plan de roulement du véhicule 60 soit placée derrière la projection orthogonale, dans ce même plan de roulement, de l'extrémité arrière du véhicule 60. Dans ce cas, la longueur totale du véhicule 60 n'est pas réduite mais une protection supplémentaire est fournie au véhicule 60.

L'amortisseur de chocs peut être réalisé différemment. En particulier, l'amortisseur de chocs n'est pas nécessairement un pare-chocs.

Par exemple, l'amortisseur de chocs a une fonction de protection plus limitée, telle que la protection, dans la position active, d'une zone spécifique du véhicule 2. Un tel cas de figure peut se rencontrer lorsqu'il est souhaitable que les véhicules 2 et 60 présentent des trains de roues emboîtés lorsqu'ils forment le convoi 50, ou que les véhicules 2 et 60 présentent des formes complémentaires l'un par rapport à l'autre de façon à pouvoir s'emboîter l'un dans l'autre lorsqu'ils forment le convoi de façon à réduire leur encombrement. A cet effet, le véhicule 60 peut présenter une ouverture dans l'extrémité avant du châssis 4 dans laquelle l'extrémité arrière du châssis du véhicule 2 est emboîtée de façon réversible lorsque ces véhicules 2 et 60 sont attachés pour former le convoi 50. Dans ce cas, cette ouverture doit être protégée lorsqu'aucun véhicule n'est attaché à l'avant du véhicule 60, car laisser cette ouverture béante à l'avant du véhicule pourrait être dangereux pour des piétons lorsque le véhicule circule, ce qui est contraire aux normes de sécurité. Dans ce cas, pour y remédier, l'amortisseur de chocs est conformé de façon à protéger et recouvrir cette ouverture lorsqu'il est dans la position active. L'amortisseur de chocs est par exemple un capot qui recouvre cette ouverture lorsqu'il est dans la position active. La définition des trains de roues emboîtés est par exemple celle décrite dans la demande FR 1352128 précitée.

Dans ce cas, le véhicule 2 peut comporter, en plus de l'amortisseur de chocs, un pare-chocs additionnel qui n'est pas apte à se déplacer vers une position escamotée. Ce pare-chocs additionnel est par exemple un pare-chocs connu en soi ayant pour fonction principale de protéger le véhicule 2 contre des chocs mécaniques. Le véhicule 2 peut aussi ne pas comporter cet amortisseur de chocs additionnel et dans ce cas c'est le butoir 42 qui a pour fonction d'absorber des chocs mécaniques pouvant survenir sur l'extrémité avant du véhicule 2.

Tout ce qui a été décrit en référence au pare-chocs 12 peut donc s'appliquer de façon générale à l'amortisseur de chocs du véhicule 2.

Les roues 6, 8 peuvent être placées différemment sur le châssis 4. En particulier, les roues peuvent s'étendre, selon la direction X, au-delà des extrémités avant et arrière du châssis 4. Dans ce cas, les longueurs L et L' sont définies en conséquence.

## Revendications

1. Véhicule automobile (2) routier, comportant :
- un châssis (4) s'étendant le long d'un axe longitudinal entre une extrémité avant et une extrémité arrière ;
- un amortisseur de chocs (12) comportant une face frontale (14) et étant apte à absorber au moins une partie de l'énergie d'un choc mécanique contre un obstacle reçu sur sa face frontale en se déformant :
• depuis une position active, dans laquelle il est directement exposé à l'extérieur du véhicule automobile devant l'une ou l'autre de l'extrémité avant ou arrière afin de protéger cette extrémité contre un choc mécanique,
• vers une position accidentée, distincte de la position active ;
- un dispositif de déplacement (40) apte à déplacer automatiquement, en alternance et de façon réversible, l'amortisseur de chocs entre :
• la position active, et
• une position escamotée, distincte des positions active et accidentée, **caractérisé en ce que** ce dispositif de déplacement (40) comporte :
• un butoir (42) mobile apte à venir en appui sur une face d'appui située sur un autre véhicule avant que l'amortisseur de choc ne vienne toucher cet autre véhicule, ce butoir étant déplaçable, de façon réversible, par la force de réaction de la face d'appui lorsque le véhicule (2) se rapproche de l'autre véhicule,
• depuis une position déployée,
• vers une position rétractée, dans laquelle le butoir est plus enfoncé vers l'intérieur du véhicule (2) que dans la position déployée ;
• une liaison mécanique (45) entre le butoir et l'amortisseur de chocs, cette liaison étant apte à transformer le déplacement du butoir de sa position déployée vers sa position rétractée en un déplacement correspondant de l'amortisseur de chocs de sa position active vers sa position escamotée au fur et à mesure que le butoir s'enfonce vers sa position rétractée.

2. Véhicule selon la revendication 1, dans lequel le dispositif de déplacement (40) comporte une liaison pivot (34), autour de laquelle l'amortisseur de chocs est apte à pivoter pour se déplacer entre ses positions active et escamotée lorsqu'il est entraîné en déplacement par le déplacement du butoir (42).

3. Véhicule selon la revendication 2, dans lequel le butoir se déplace uniquement en translation entre ses positions déployée et rétractée et la liaison mécanique (45) comporte :
- une crémaillère (44) fixée sans degré de liberté au butoir (42), et
- au moins un pignon (47) engrené avec la crémaillère (44), de manière à transformer la translation du butoir en une rotation de ce pignon (46) lorsque la crémaillère (44) se déplace en translation et solidaire de l'amortisseur de chocs pour faire pivoter cet amortisseur de chocs entre ses positions active et escamotée au fur et à mesure que le pignon tourne.

4. Véhicule selon l'une quelconque des revendications précédentes, dans lequel le dispositif de déplacement (40) comporte un élément de rappel (48) sollicitant en permanence le butoir vers sa position déployée de manière à ramener l'amortisseur de chocs (12) dans sa position active lorsque ce véhicule s'éloigne de l'autre véhicule.

5. Véhicule selon l'une quelconque des revendications précédentes, dans lequel l'amortisseur de chocs (12) est un pare-chocs.

6. Véhicule selon la revendication 5, dans lequel :
- le véhicule comporte un habitacle (10) apte à accueillir des passagers du véhicule, et
- dans sa position escamotée, le pare-chocs (12) est situé au-dessus de l'habitacle de manière à former un arceau de sécurité apte à limiter l'écrasement de l'habitacle en cas de renversement du véhicule.

7. Véhicule selon la revendication 6, dans lequel le pare-chocs présente une forme d'arceau et comprend à cet effet des bras (20) situés à chaque extrémité de la face frontale et s'étendant perpendiculairement à cette face frontale, à ± 30 % près, de chaque côté du véhicule, ces bras présentant chacun des faces latérales directement exposées à l'extérieur du véhicule pour absorber un choc mécanique pouvant survenir sur un flanc latéral du véhicule lorsque le pare-chocs est dans sa position active.

8. Véhicule selon les revendication 2 et 7, dans lequel les liaisons pivot (34) sont situées sur chaque côté du véhicule et raccordent mécaniquement des extrémités libres des bras (20) au châssis, ces liaisons pivot permettent de déplacer, par rotation autour d'axes de rotation (Y) des liaisons pivot, le pare-chocs entre ses positions escamotée et active.

9. Véhicule selon l'une quelconque des revendications précédentes, dans lequel le véhicule comporte des attelages avant (16) et arrière (18), situés, respectivement, aux extrémités avant et arrière du châssis, pour atteler ce véhicule à d'autres véhicules routiers automobiles attelables afin de former un convoi routier (50),
• l'attelage avant étant déplaçable, en alternance, entre :
∘ une position attelée, dans laquelle cet attelage avant coopère avec un attelage arrière, identique à l'attelage arrière de ce véhicule et situé sur un autre véhicule, pour attacher mécaniquement ces véhicules entre eux, et
∘ une position dételée, dans laquelle ces véhicules sont détachés l'un de l'autre ;
• l'attelage arrière étant déplaçable, en alternance, entre :
• une position attelée, dans laquelle cet attelage arrière coopère avec un attelage avant, identique à l'attelage avant de ce véhicule et situé sur un autre véhicule, pour attacher mécaniquement ces véhicules entre eux, et
• une position dételée, dans laquelle ces véhicules sont détachés l'un de l'autre.

10. Véhicule selon la revendication 9, dans lequel, dans la position active, l'amortisseur de chocs (12) est placé devant l'un ou l'autre des attelages avant ou arrière du véhicule de manière à protéger cet attelage contre un choc mécanique.

## Patentansprüche

1. Straßenkraftfahrzeug (2), umfassend:
- ein Chassis (4), das sich entlang einer Längsachse zwischen einem vorderen Ende und einem hinteren Ende erstreckt;
- einen Stoßdämpfer (12), der eine Vorderseite (14) umfasst und dazu geeignet ist, mindestens einen Teil der Energie eines mechanischen Stoßes gegen ein Hindernis, der auf seiner Vorderseite erhalten wird, zu absorbieren, indem er sich verformt:
• ausgehend von einer aktiven Position, in der er direkt auf der Außenseite des Kraftfahrzeugs vor entweder dem vorderen oder dem hinteren Ende freiliegt, um dieses Ende vor einem mechanischen Stoß zu schützen,
• zu einer Unfallsposition, die sich von der aktiven Position unterscheidet;
- eine Verlagerungsvorrichtung (40), die dazu geeignet ist, automatisch abwechselnd und umkehrbar den Stoßdämpfer zu verlagern zwischen:
• der aktiven Position und
• einer eingefahrenen Position, die sich von der aktiven und der Unfallsposition unterscheidet,
**dadurch gekennzeichnet, dass** diese Verlagerungsvorrichtung (40) Folgendes umfasst:
• einen beweglichen Anschlag (42), der dazu geeignet ist, auf einer Anlagefläche, die an einem anderen Fahrzeug befindet, zum Anliegen zu kommen, bevor der Stoßdämpfer dieses andere Fahrzeug berührt, wobei dieser Anschlag umkehrbar durch die Reaktionskraft der Anlagefläche, wenn sich das Fahrzeug (2) dem anderen Fahrzeug nähert, verlagerbar ist:
∘ von einer ausgefahrenen Position,
∘ zu einer eingefahrenen Position, in der der Anschlag weiter in das Innere des Fahrzeugs (2) eingesunken ist als in der ausgefahrenen Position;
• eine mechanische Verbindung (45) zwischen dem Anschlag und dem Stoßdämpfer, wobei diese Verbindung dazu geeignet ist, die Verlagerung des Anschlags von seiner ausgefahrenen Position zu seiner eingefahrenen Position in eine entsprechende Verlagerung des Stoßdämpfers von seiner aktiven Position zu seiner eingefahrenen Position in dem Maße, in dem der Anschlag zu seiner eingefahrenen Position einsinkt, umzuwandeln.

2. Fahrzeug nach Anspruch 1, wobei die Verlagerungsvorrichtung (40) eine Zapfenverbindung (34) umfasst, um die der Stoßdämpfer dahingehend schwenken kann, sich zwischen seiner aktiven Position und seiner eingefahrenen Position zu verlagern, wenn er durch die Verlagerung des Anschlags (42) verlagert wird.

3. Fahrzeug nach Anspruch 2, wobei sich der Anschlag nur in Verschiebung zwischen seiner ausgefahrenen und seiner eingefahrenen Position verlagert, und die mechanische Verbindung (45) Folgendes umfasst:
- eine Zahnstange (44), die ohne Freiheitsgrad an dem Anschlag (42) befestigt ist, und
- mindestens ein Ritzel (47), das dahingehend mit der Zahnstange (44) kämmt, die Verschiebung des Anschlags in eine Drehung dieses Zahnrads (46) umzuwandeln, wenn sich die Zahnstange (44) in Verschiebung und fest verbunden mit dem Stoßdämpfer verlagert, um diesen Stoßdämpfer zwischen seiner aktiven Position und seiner eingefahrenen Position in dem Maße, in dem sich Zapfen dreht, zu schwenken.

4. Fahrzeug nach einem der vorhergehenden Ansprüche, wobei die Verlagerungsvorrichtung (40) ein Rückstellelement (48) umfasst, das den Anschlag durchweg zu seiner ausgefahrenen Position dahingehend belastet, den Stoßdämpfer (12) in seine aktive Position zurückzubringen wird, wenn sich dieses Fahrzeug von dem anderen Fahrzeug entfernt.

5. Fahrzeug nach einem der vorhergehenden Ansprüche, wobei der Stoßdämpfer (12) ein Stoßfänger ist.

6. Fahrzeug nach Anspruch 5, wobei:
- das Fahrzeug einen Fahrgastraum (10) umfasst, der dazu geeignet ist, Insassen des Fahrzeugs unterzubringen, und
- der Stoßfänger (12) in seiner eingefahrenen Position über dem Fahrgastraum liegt, so dass er einen Überrollbügel bildet, der dazu geeignet ist, das Zusammendrücken des Fahrgastraums im Fall eines Überschlags des Fahrzeugs einzuschränken.

7. Fahrzeug nach Anspruch 6, wobei der Stoßfänger eine Bogenform aufweist und dazu Arme (20) umfasst, die an jedem Ende der Vorderseite liegen und sich senkrecht ± 30 % zu dieser Vorderseite auf auf jeder Seite des Fahrzeugs erstrecken, wobei diese Arme jeweils Seitenflächen aufweisen, die direkt auf der Außenseite des Fahrzeugs freiliegen, um einen mechanischen Stoß zu absorbieren, der auf einer Seitenflanke des Fahrzeugs auftreten kann, wenn der Stoßfänger in seiner aktiven Position ist.

8. Fahrzeug nach den Ansprüchen 2 und 7, wobei sich die Verbindungszapfen (34) auf jeder Seite des Fahrzeugs befinden und freie Enden der Arme (20) mechanisch mit dem Chassis verbinden, wobei diese Zapfenverbindungen es erlauben, den Stoßfänger durch Drehung um Drehachsen (Y) der Zapfenverbindungen zwischen seiner eingefahrenen und seiner aktiven Position zu verlagern.

9. Fahrzeug nach einem der vorhergehenden Ansprüche, wobei das Fahrzeug eine vordere (16) und eine hintere (18) Koppelvorrichtung umfasst, die sich an dem vorderen bzw. dem hinteren Ende des Chassis befinden, um dieses Fahrzeug mit anderen koppelbaren Straßenkraftfahrzeugen zu koppeln, um einen Straßenlastzug (50) zu bilden,
» wobei die vordere Kopplung abwechselnd verlagerbar ist zwischen:
∘ einer gekoppelten Position, in der diese vordere Kopplung mit einer hinteren Kopplung, die mit der hinteren Kopplung dieses Fahrzeugs identisch ist und sich auf einem anderen Fahrzeug befindet, dahingehend zusammenwirkt, diese Fahrzeuge mechanisch aneinander zu befestigen, und
∘ eine abgekoppelte Position, in der diese Fahrzeuge voneinander getrennt sind;
» wobei die hintere Kopplung abwechselnd verlagerbar ist zwischen:
∘ einer gekoppelten Position, in der diese hintere Kopplung mit einer vorderen Kopplung, die mit der vorderen Kopplung dieses Fahrzeugs identisch ist und sich auf einem anderen Fahrzeug befindet, dahingehend zusammenwirkt, diese Fahrzeuge mechanisch aneinander zu befestigen, und
∘ einer abgekoppelten Position, in der diese Fahrzeuge voneinander getrennt sind.

10. Fahrzeug nach Anspruch 9, wobei der Stoßdämpfer (12) in der aktiven Position vor entweder der vorderen oder hinteren Kopplung des Fahrzeugs platziert ist, um diese Kopplung vor einem mechanischen Stoß zu schützen.

## Claims

1. Road motor vehicle (2) comprising:
- a chassis (4) extending along a longitudinal axis between a front end and a rear end,
- a shock absorber (12) having a front face (14) that is designed to absorb at least a portion of the energy of a mechanical impact against an obstacle received on the front face of same by deforming:
• from an active position, in which same is directly exposed on the outside of the motor vehicle in front of either the front or the rear end in order to protect said end against a mechanical impact,
• to a damaged position that is different from the active position,
- a movement device (40) designed to automatically move the shock absorber alternately and reversibly between:
• the active position, and
• a retracted position that is different from the active and damaged positions, in which this movement device (40) comprises:
• a movable stop (42) designed to bear against a bearing face located on another vehicle before the shock absorber touches said other vehicle, this stop being reversibly movable by the reactive force of the bearing face when the vehicle (2) approaches the other vehicle,
• from a deployed position,
• towards a retracted position in which the stop penetrates further towards the inside of the vehicle (2) than in the deployed position,
• a mechanical link (45) between the stop and the shock absorber, said link being designed to transform the movement of the stop from the deployed position to the retracted position of same, into a corresponding movement of the shock absorber from the active position of same towards the retracted position of same as the stop moves towards the retracted position of same.

2. Vehicle according to Claim 1, in which the movement device (40) includes a pivot link (34) about which the shock absorber is designed to pivot such as to move between the active and retracted positions of same when moved by the movement of the stop (42).

3. Vehicle according to Claim 2, in which the stop moves exclusively in translation between the deployed and retracted positions of same and the mechanical link (45) comprises:
- a rack (44) attached with no degree of freedom to the stop (42), and
- at least one pinion (47) meshed with the rack (44) in order to transform the translational movement of the stop into a rotational movement of said pinion (46) when the rack (44) rigidly connected to the shock absorber moves in translation, to pivot said shock absorber between the active and retracted positions of same as the pinion rotates.

4. Vehicle according to any one of the preceding claims, in which the movement device (40) includes a return element (48) permanently pressing the stop towards the deployed position of same in order to return the shock absorber (12) to the active position of same when this vehicle moves away from the other vehicle.

5. Vehicle according to any one of the preceding claims, in which the shock absorber (12) is a fender.

6. Vehicle according to Claim 5, in which:
- the vehicle includes a passenger compartment (10) designed to accommodate the passengers of the vehicle, and
- in the retracted position of same, the fender (12) is located above the passenger compartment such as to form a roll bar designed to limit crushing of the passenger compartment if the vehicle is overturned.

7. Vehicle according to Claim 6, in which the fender is arch shaped and accordingly comprises arms (20) located at each extremity of the front face and extending perpendicular ±30% to said front face on each side of the vehicle, each of these arms having lateral faces directly exposed on the outside of the vehicle to absorb any mechanical impact suffered by a lateral flank of the vehicle when the fender is in the active position of same.

8. Vehicle according to Claims 2 and 7, in which the pivot links (34) are located on each side of the vehicle and mechanically connect the free extremities of the arms (20) to the chassis, these pivot links enabling the fender to move, by rotation about the axes of rotation (Y) of the pivot links, between the retracted and active positions of same.

9. Vehicle according to any one of the preceding claims, in which the vehicle includes front and rear coupling devices (16, 18) located respectively at the front and rear ends of the chassis to couple said vehicle to other road motor vehicles that can be coupled together to form a road convoy (50),
• the front coupling device being movable alternately between:
∘ a coupled position in which said front coupling device co-operates with a rear coupling device that is identical to the rear coupling device of said vehicle and located on another vehicle in order to mechanically attach said vehicles together, and
∘ an uncoupled position in which said vehicles are detached from one another,
• the rear coupling device being movable alternately between:
• a coupled position in which said rear coupling device co-operates with a front coupling device that is identical to the front coupling device of said vehicle and located on another vehicle in order to mechanically attach said vehicles together, and
• an uncoupled position in which said vehicles are detached from one another.

10. Vehicle according to Claim 9, in which, in the active position, the shock absorber (12) is placed in front of either the front coupling device or the rear coupling device of the vehicle such as to protect said coupling device against mechanical impacts.
